(19) Europäisches Patentamt
European Patent Office
Office européen des brevets

(11) EP 4 773 580 A1

(12) EUROPEAN PATENT APPLICATION

(43) Date of publication:
08.07.2026 Bulletin 2026/28

(21) Application number: 25221013.3

(22) Date of filing: 05.12.2025

(51) International Patent Classification (IPC):
H04L 67/60 (2022.01)    G06N 3/02 (2006.01)

(52) Cooperative Patent Classification (CPC):
H04L 67/60; G06N 3/02; G06N 3/047; G06N 3/088;
G06N 7/01

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 06.01.2025 IN 202521001203

(71) Applicant: Tata Consultancy Services Limited
Maharashtra (IN)

(72) Inventors:
• MISHRA, Garima
560066 Bangalore Urban, Karnataka (IN)
• SUMAN, Santan
560066 Bangalore Urban, Karnataka (IN)
• RATH, Hemant Kumar
751024 Bhubaneswar, Odisha (IN)
• NADAF, Shameemraj Mohiuddin
560066 Bangalore Urban, Karnataka (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR REAL-TIME TRAFFIC CLASSIFICATION IN 5G NETWORKS**

(57) Conventional traffic classification methods mainly depend on pre-defined criteria from known data, highlighting demand for advanced methods that can handle new types of traffic. The present disclosure receives an unlabeled data set comprising a plurality of data points from one or more Downlink Control Information messages and pre-processes the received unlabeled data set. A set of relevant features is selected from plurality of data points using a correlation matrix. One or more hyper-parameters of Gaussian Mixture Model (GMM) are evaluated for the unlabeled dataset with selected set of relevant features using Component-wise space Expectation Maximization technique (CEM) method. An optimal number of clusters is estimated using the evaluated one or more hyper-parameters of GMM. Each of the plurality of data points are labeled using the estimated optimal number of clusters to obtain a labelled data set. A classifier model is created to perform traffic classification of the obtained labelled dataset.

| INPUT MODULE 202 | → | DATA PRE-PROCESSING MODULE 204 | → | DYNAMIC CLUSTERING AND DATA LABELING MODULE 206 | → | SERVICE CLASSIIFCATION MODULE 208 | → | DATA VERIFICATION WITH OUT-OF-DISTRIBUTION DETECTION MODULE 210 |

FIG. 2

EP 4 773 580 A1

**Description**

CROSS-REFERENCE TO RELATED APPLICATIONS AND PRIORITY

The present application claims priority to Indian application no. 202521001203, filed on January 06, 2025.

TECHNICAL FIELD

The disclosure herein generally relates to network traffic service classification, and, more particularly, to a method and system for real-time traffic classification in 5G networks.

BACKGROUND

In 5G networks and beyond, Quality of Service (QoS) parameters are necessary for optimal resource allocation. The essential elements of QoS assured diverse services are Traffic Classification (TC) and service differentiation. Service differentiation involves grouping of applications with similar resource requirements, whereas TC maps different applications to their required network resources (such as network slices, Protocol Data Unit (PDU) sessions, radio bearers, etc.). For instance, audio-video streaming applications typically require comparable network resources, while audio/video calls in real-time demonstrate distinct patterns of network resource usage. TC ensures that each application is assigned to the correct the appropriate service class.

There are multiple standard bodies that propose various approaches to Traffic Classification (TC), such as: (i) NI-QoS (Network Initiated-Quality of Service (known in the art): It is a 3rd Generation Partnership Project (3GPP) standard. The NI-QoS is based on management of bearers and their associated QoS by the network, (ii) L4S (Low Latency Low Loss Scalable Throughput (known in the art)): The L4S is a Internet Engineering Task Force (IETF) defined solution which provides low latency and high throughput to time sensitive IP traffic, and (iii) URSP (UE Route Selection Policy (known in the art)): The URSP is a 3GPP defined standard to establish a Protocol Data Unit (PDU) session for a network slice. The NI-QoS and the URSP are traffic classification methods which are employed to manage QoS in mobile networks. However, current 3GPP standards and devices utilizing these mechanisms are not capable of managing QoS for applications beyond Voice over LTE (VoLTE) over IP Multimedia Subsystem (IMS).

With the rapid increase in diverse applications and services in 5G networks, such as Narrow Band (NB) or massive Internet of Things (IoT), Ultra High Definition (UHD) video, Augmented Reality/Virtual Reality (AR/VR) etc., conventional network management methods might not address the specific needs of these services. Additionally, conventional Traffic Classification (TC) methods mainly depend on pre-defined criteria from known data, highlighting the increasing demand for more advanced methods that can handle new types of traffic.

The widespread use of encryption technologies on the payloads (application data) makes it difficult to extract useful information from them. The dominant classification methods mainly analyze traffic by examining direction of their flow and statistical attributes. However, several statistical attributes are not appropriate for classification in real-time as some are evaluated only at the completion of the data flow. Hence capturing them and then selecting a set of relevant traffic features is a major challenge for real-time traffic classification.

SUMMARY

Embodiments of the present disclosure present technological improvements as solutions to one or more of the above-mentioned technical problems recognized by the inventors in conventional systems. For example, in one embodiment, a method for real-time traffic classification in 5G networks is provided. The method includes receiving, via one or more hardware processors, an unlabeled dataset from one or more Downlink Control Information (DCI) messages carried within an LTE (Long-Term Evolution)-PDCCH (Physical Downlink Control Channel), wherein the unlabeled data set comprises a plurality of data points and wherein each of the plurality of data points comprises a plurality of features; pre-processing, via the one or more hardware processors, the received unlabeled data set comprising the plurality of data points using a data cleaning technique and a feature selection technique; selecting, via the one or more hardware processors, a set of relevant features from the plurality of data points comprised in the received unlabeled data set using a correlation matrix, wherein the correlation matrix identifies and retains the set of relevant features by eliminating one or more irrelevant features; performing, via the one or more hardware processors, iteratively till a cost function is less than a pre-defined threshold value: (i) evaluating one or more hyper-parameters of a Gaussian Mixture Model (GMM) from the unlabeled data set with the selected set of relevant features using a Component-wise space Expectation Maximization technique (CEM) method; and (ii) estimating an optimal number of clusters using the evaluated one or more hyper-parameters of the Gaussian Mixture Model (GMM); labeling, via the one or more hardware processors, each of the plurality of data points comprised in the unlabeled dataset with the selected set of relevant features using the estimated optimal number of clusters to obtain a labelled data set; and creating, via the one or more hardware processors, a classifier model using a deep learning technique to perform a traffic classification of the obtained labelled dataset, wherein a base Convolutional neural network (CNN) model is used for creating the classifier model, and wherein an additional layer is added to the base Convolutional neural network (CNN) model to (i) detect an out-of-distribution data and (ii) handle at least one of one or more unknown data points and one or more new data points from a new application.

In another aspect, there is provided a system for real-time traffic classification in 5G networks. The system comprises: a memory storing instructions; one or more communication interfaces; and one or more hardware processors coupled to the memory via the one or more communication interfaces, wherein the one or more hardware processors are configured by the instructions to: receive an unlabeled dataset from one or more Downlink Control Information (DCI) messages carried within an LTE (Long-Term Evolution)-PDCCH (Physical Downlink Control Channel), wherein the unlabeled data set comprises a plurality of data points and wherein each of the plurality of data points comprises a plurality of features. The system further includes pre-processing the received unlabeled data set comprising the plurality of data points using a data cleaning technique and a feature selection technique; selecting a set of relevant features from the plurality of data points comprised in the received unlabeled data set using a correlation matrix, wherein the correlation matrix identifies and retains the set of relevant features by eliminating one or more irrelevant features; performing iteratively till a cost function is less than a pre-defined threshold value: (i) evaluating one or more hyper-parameters of a Gaussian Mixture Model (GMM) from the unlabeled data set with the selected set of relevant features using a Component-wise space Expectation Maximization technique (CEM) method; and (ii) estimating an optimal number of clusters using the evaluated one or more hyper-parameters of the Gaussian Mixture Model (GMM); labeling each of the plurality of data points comprised in the unlabeled dataset with the selected set of relevant features using the estimated optimal number of clusters to obtain a labelled data set; and creating a classifier model using a deep learning technique to perform a traffic classification of the obtained labelled dataset, wherein a base Convolutional neural network (CNN) model is used for creating the classifier model, and wherein an additional layer is added to the base Convolutional neural network (CNN) model to (i) detect an out-of-distribution data and (ii) handle at least one of one or more unknown data points and one or more new data points from a new application.

In yet another aspect, there are provided one or more non-transitory machine-readable information storage mediums comprising one or more instructions which when executed by one or more hardware processors cause receiving an unlabeled dataset from one or more Downlink Control Information (DCI) messages carried within an LTE (Long-Term Evolution)-PDCCH (Physical Downlink Control Channel), wherein the unlabeled data set comprises a plurality of data points and wherein each of the plurality of data points comprises a plurality of features; pre-processing the received unlabeled data set comprising the plurality of data points using a data cleaning technique and a feature selection technique; selecting a set of relevant features from the plurality of data points comprised in the received unlabeled data set using a correlation matrix, wherein the correlation matrix identifies and retains the set of relevant features by eliminating one or more irrelevant features; performing iteratively till a cost function is less than a pre-defined threshold value: (i) evaluating one or more hyper-parameters of a Gaussian Mixture Model (GMM) from the unlabeled data set with the selected set of relevant features using a Component-wise space Expectation Maximization technique (CEM) method; and (ii) estimating an optimal number of clusters using the evaluated one or more hyper-parameters of the Gaussian Mixture Model (GMM); labeling each of the plurality of data points comprised in the unlabeled dataset with the selected set of relevant features using the estimated optimal number of clusters to obtain a labelled data set; and creating a classifier model using a deep learning technique to perform a traffic classification of the obtained labelled dataset, wherein a base Convolutional neural network (CNN) model is used for creating the classifier model, and wherein an additional layer is added to the base Convolutional neural network (CNN) model to (i) detect an out-of-distribution data and (ii) handle at least one of one or more unknown data points and one or more new data points from a new application.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for real-time traffic classification in 5G networks, according to some embodiments of the present disclosure.
FIG. 2 is a functional block diagram of the system for real-time traffic classification in 5G networks, according to some embodiments of the present disclosure.
FIGS. 3A and 3B are flow diagrams illustrating the steps involved in the method for real-time traffic classification in 5G networks, according to some embodiments of the present disclosure.
FIG. 4 is a block diagram illustrating a real data collection, according to some embodiments of the present disclosure.

FIG. 5 is a block diagram illustrating a data pre-processing in conjunction with the method for real-time traffic classification in 5G networks, according to some embodiments of the present disclosure.

FIGS. 6A and 6B illustrate a correlation between the features of the collected Downlink Control Information (DCI) data, according to some embodiments of the present disclosure.

FIG. 7 is a block diagram illustrating a generative approach for dynamic clustering and data labeling, according to some embodiments of the present disclosure.

FIGS. 8A through 8C illustrates fitting a Gaussian Mixture with overlapping components including (a) initialization: $m_{nz}$ = 10 (b) Intermediate estimate: $m_{nz}$ = 7 (c) Final estimate: $m_{nz}$ = 4, according to some embodiments of the present disclosure.

FIG. 9 shows one or more Gaussian Mixture Model (GMM) clusters - mixtures which are obtained without any pre-knowledge of service classes, according to some embodiments of the present disclosure.

FIG. 10 is a block diagram illustrating an Out-Of-Distribution Detection (OOD) in conjunction with the method for real-time traffic classification in 5G networks, according to some embodiments of the present disclosure.

FIG. 11 shows the Out-Of-Distribution Detection (OOD) score evaluation for Out-of-Distribution Data, according to some embodiments of the present disclosure.

FIG. 12 shows an In-Distribution Detection (OOD) score evaluation for In-Distribution Data, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Over the years, applications have evolved, and so have the algorithms and techniques used to classify the traffic generated by them. Initially port numbers were used, which does not offer a solution to traffic classification when dynamic ports are used for different services (as known in the art). Eventually, Deep Packet Inspection (DPI) techniques (known in the art) were performed to classify traffic by looking at the patterns in the payload of the data packets. Although port-based classifiers are quicker and easier to use than DPI techniques, DPI performed better but required more computations. Most of the current classification techniques identify traffic by examining statistical aspects based on flow. The statistical features assume that the incoming packets are highly correlated and independent (as known in the art). Further, it is shown that its accuracy is affected by variations of the user's behavior, network-specific conditions, etc. The acquired payload is typically encrypted due to the widespread usage of encryption technologies, which prevents extraction of valuable information from the payload to accomplish accurate categorization (as known in the art).

The Traffic Classification (TC) activity is typically performed on traffic within the same network domain, at the Link Layer (L2) or higher. In one of the existing studies, the Traffic Classification (TC) task was conducted using traffic traces from Downlink Control Information (DCI) information from LTE (Long-Term Evolution)-PDCCH (Physical Downlink Control Channel), without any need to decrypt the transmitted data. The researchers proposed a supervised classification method using Convolution Neural Network (CNN). Although Traffic Classification (TC) algorithms based on supervised technique (known in the art) have good performance, they rely heavily on labeled datasets for training. To tackle the problem of data labelling, the one of the existing works presented a semi-supervised method for determining traffic patterns. Much of the existing research focuses on predefined environments where prior knowledge of data distribution is available.

The present disclosure addresses these issues by providing a method and system for real-time traffic classification in 5G networks. The present disclosure receives an unlabeled dataset from one or more Downlink Control Information (DCI) messages carried within a Long-Term Evolution (LTE) Physical Downlink Control Channel (PDCCH). Further, the received unlabeled data set comprising a plurality of data points is preprocessed using a data cleaning technique and a feature selection technique. A set of relevant features is selected from the plurality of data points comprised in the received unlabeled data set using a correlation matrix. Furthermore, the following steps are performed iteratively till the cost function is less than a user defined threshold value. One or more hyper-parameters of a Gaussian Mixture Model (GMM) are evaluated from the unlabeled dataset with the selected set of relevant features using a Component-wise space Expectation Maximization technique (CEM) method. An optimal number of clusters is estimated using the evaluated one or more hyper-parameters of the Gaussian Mixture Model (GMM). Furthermore, each of the plurality of data points comprised in the unlabeled dataset with the selected set of relevant features are labeled using the estimated optimal number of clusters to obtain a labelled data set. Finally, a classifier model is created using a deep learning technique to perform a traffic classification of the obtained labelled dataset.

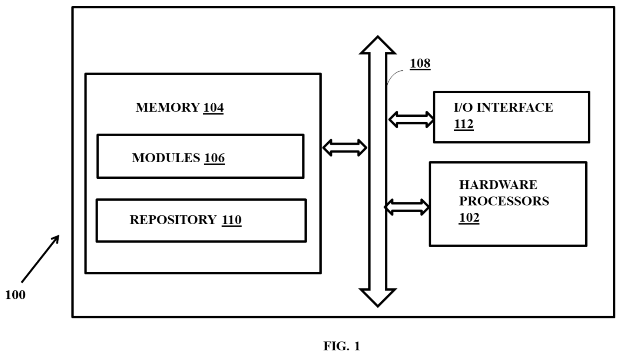

Referring now to the drawings, and more particularly to FIG. 1 through FIG. 12, where similar reference characters denote corresponding features consistently throughout the figures, there are shown preferred embodiments, and these embodiments are described in the context of the following exemplary system and/or method.

FIG. 1 illustrates an exemplary system for real-time traffic classification in 5G networks, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

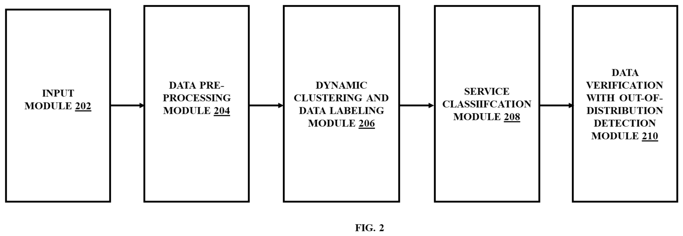

The plurality of modules 106 includes programs or coded instructions that supplement applications or functions performed by the system 100 for real-time traffic classification in 5G networks. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for real-time traffic classification in 5G networks. In an embodiment, the modules 106 include an input module 202, a data pre-processing module 204, a dynamic clustering and data labeling module 206, a service classification module 208 and a data verification with out-of-distribution detection module 210. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

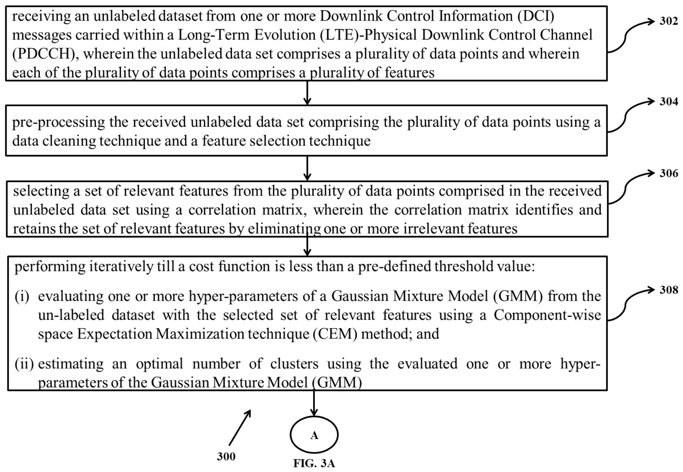

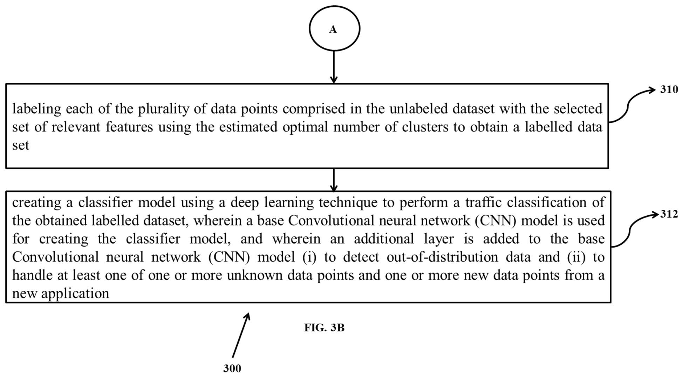

FIGS. 3A and 3B are flow diagrams illustrating a method for real-time traffic classification in 5G networks using the systems 100 of FIGS. 1-2, according to some embodiments of the present disclosure. Steps of the method of FIGS. 3A and 3B shall be described in conjunction with the components of FIG. 2. At step 302 of the method 300, the input module 202 executed via the one or more hardware processors 102 receives an unlabeled dataset from one or more Downlink Control Information (DCI) messages carried within a Long-Term Evolution (LTE) Physical Downlink Control Channel (PDCCH). The unlabeled data set comprises a plurality of data points and wherein each of the plurality of data points comprises a plurality of features. The primary objective of Downlink Control Information (DCI) within 5G-New Radio (5G-NR) aligns with its role in 4G LTE. The proposed method enables traffic classification directly from radio-link level information in both 4G and 5G networks, eliminating the need to decrypt the transmitted data.

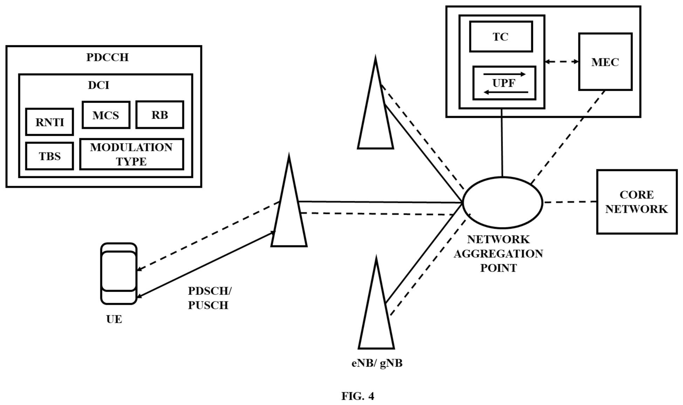

FIG. 4 is a block diagram illustrating a real data collection, according to some embodiments of the present disclosure. Consider a scenario as shown in FIG. 4, where a Multi-access Edge Computing (MEC) server is co-located with a network aggregation point of Base Stations (BSs) (known in the art). The MEC offers computing and storage resources situated at the edge of the network, close to end-users. The MEC interfaces with the radio access network to gather statistics of the Base Stations (BSs) to control traffic through User Plane Function (UPF). The radio information which is stored in DCI is served to the MEC and a set of relevant features are extracted from DCI data. After the feature extraction, the MEC further directs DCI data to the traffic classifier (TC).

The traffic classifier (TC) classifies packets for Quality of Service (QoS) flow marking to map Quality of Service (QoS) flows to access radio resources. During Downlink (DL) data transmission the data packets are scheduled to be transmitted over the PDSCH (Physical Downlink shared channel) channel. Since PDSCH is a shared channel, the User Equipment's (UEs) are not aware of the location of the data designated for them. This information is stored in DCI, carried by PDCCH, which is transmitted from the Base Stations (BS) to the User Equipment's (UEs).

The User Equipment (UE) scans Physical Downlink Control Channel (PDCCH) to retrieve the information stored in DCI for a corresponding Cell Radio Network Temporary Identifier (C-RNTI). C-RNTI is a feature comprised in the DCI which helps User Equipment (UE) to locate its data transmitted over Physical Downlink Shared Channel (PDSCH) and decode it. DCI provides information about the DL data schedule, i.e., details about the Resource Block (RB) carrying the User Equipment (UE) data in both frequency and time domain, type of Modulation Code Scheme (MCS) needed to decode the data, Hybrid Automatic Repeat Request (HARQ) process number and information for other control channels (known in the art).

The scenario mentioned in FIG. 4 can be used for real data collection. However, creating this kind of setup in a lab environment is a costly affair and has several practical challenges. Therefore, a dataset is sourced from International Telecommunication Union (ITU) AI/ML in 5G Challenge 2023 (known in the art) which uses similar setup as mentioned in the above FIG. 4. The dataset was collected through measurements taken at three different base stations located at different topographies (viz., Mixed 1: mixed of residential and stadium area, Mixed 2: mixed of residential and commercial area). It is created by running specific services (viz., video streaming, audio streaming, real-time video calling, etc.) in the UEs. Each data point vector of this dataset which contains Eleven features had the following information: C-RNTI, total number of Resource Blocks (RBs) allocated in DL (RB down)/ UL (RB up) directions and their respective variances (RB down var)/(RB up var), the average Modulation Code Scheme (MCS) index assigned in Downlink (DL) (MCS down)/ UL (MCS up) directions with their respective variances (MCS down var)/ (MCS up var) and payload assigned at the physical layer in DL (Transport Block Size (TBS) Down)/ UL (TBS Up) directions. This is an unlabeled dataset which makes interpretation of the characteristics of the running services a more challenging task. The present disclosure proposes a method to identify the characteristics of unlabeled data points and map them to their corresponding service class.

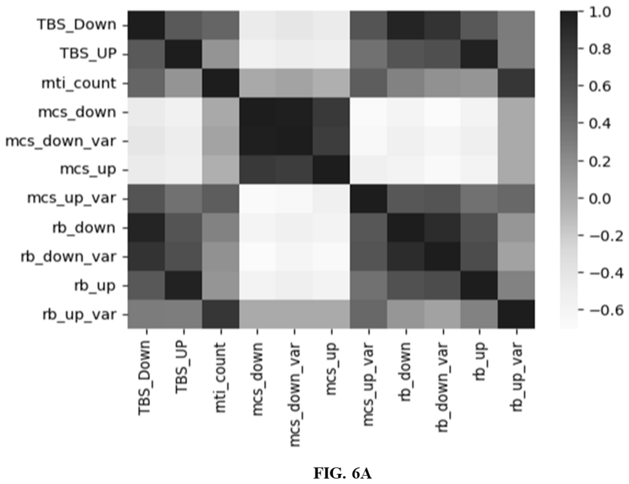

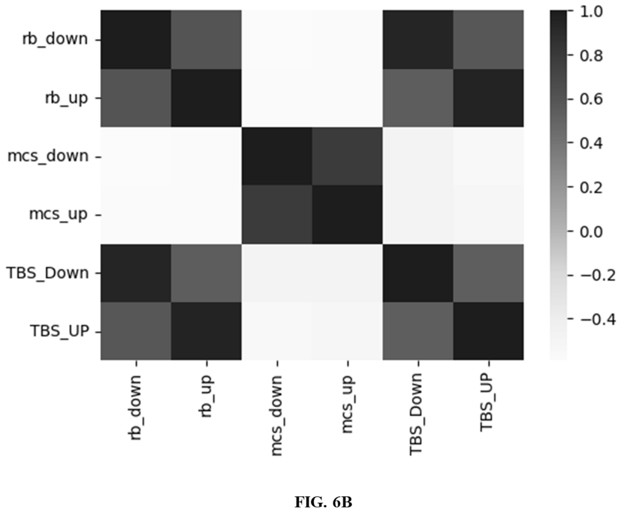

At step 304 of the method 300, the data pre-processing module 204 executed via the one or more hardware processors 102 pre-processes the received unlabeled data set comprising the plurality of data points using a data cleaning technique (known in the art) and a feature selection technique (known in the art). The present disclosure uses known techniques for data cleaning including removal of null values rows in the dataset and missing values rows. Further, for feature selection, the present disclosure uses correlation (Pearson correlation) metrics between features as shown in FIG. 6A and Fig. 6B.

At step 306 of the method 300, the data pre-processing module 204 executed via the one or more hardware processors 102 selects a set of relevant features from the plurality of data points comprised in the received unlabeled data set using a correlation matrix. The correlation matrix identifies and retains only the set of relevant features by eliminating one or more irrelevant features. The set of relevant features comprises a resource block, a transport block size, and a modulation code scheme.

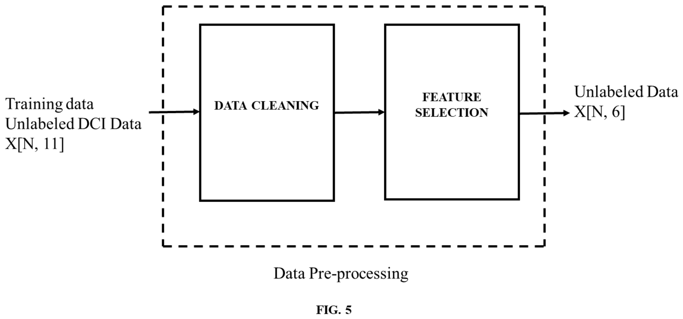

FIG. 5 is a block diagram illustrating a data pre-processing in conjunction with the method for real-time traffic classification in 5G networks, according to some embodiments of the present disclosure. The data pre-processing procedure, as shown in FIG. 5, involves two steps: 1) data cleaning, and 2) feature selection. Initially, the raw unlabeled DCI data obtained from the PDCCH channel involves dealing with the missing values and 'Not a Number' or 'NaN's. First, rows and columns with missing values are removed, along with the elimination of duplicate entries and outliers for each feature, alongside the exclusion of unnecessary information. Out of the given eleven features, a subset of six features is selected by eliminating irrelevant features.

FIGS. 6A and 6B illustrate a correlation between the features of the collected Downlink Control Information (DCI) data, according to some embodiments of the present disclosure. In the present disclosure, a Pearson correlation technique has been used to enhance model performance. The selection process involves utilization of the correlation matrix to identify and to retain only the most relevant features. For example, features such as *mcs_down_var* and *mcs_down* are highly correlated (with a value of 0.95). Similarly, *rb_down_var* is highly correlated with TBS down and rb down (with a value of 0.84 and 0.89 respectively). Contrary to this, MCS correlation values are lower and, in general, the correlation between RB, MCS and TBS are observed to be low, i.e., less than 0.5. The low value in correlation matrix indicates that there is no dependence between the variables. Based on these observations, the highly correlated features like *mcs_down_var, rb_down_var* and *rb_up_var* are removed. Then the created unlabeled dataset with selected features is stored into the vector *X,* of size *NxD* with $x = [x1, \cdots, xD] \in R^D$ representing one data point of *X,* where *N* is the number of collected samples per RNTI session and *D* is the total number of features, i.e., *D* = 6. This process enhances model performance by decreasing training time and addresses the issue of high-dimensionality data by considering only relevant informative features. Then, numerical features are normalized using a min-max scaling technique to ensure a consistent scale. Next, the derived dataset is divided into two parts, 70% of this is used for training the classification model and the rest 30% is used for testing the model.

At step 308 of the method 300, the dynamic clustering and data labeling module 206 executed via the one or more hardware processors 102 performs the following steps iteratively till a cost function is less than a predefined threshold value (e.g., a user defined threshold value). Herein the present disclosure, the predefined threshold value of $\varepsilon = 1X10^{-4}$ is used for a convergence criterion. However, such predefined threshold value shall not be construed as limiting the scope of the present disclosure. One or more hyper-parameters of a Gaussian Mixture Model (GMM) are evaluated from the unlabeled dataset with the selected set of relevant features using a Component-wise space Expectation Maximization technique (CEM) method. An optimal number of clusters are estimated using the evaluated one or more hyper-parameters of the Gaussian Mixture Model (GMM).

At step 310 of the method 300, the dynamic clustering and data labeling module 206 executed via the one or more hardware processors 102 labels each of the plurality of data points comprised in the unlabeled dataset with the selected set of relevant features using the estimated optimal number of clusters to obtain a labelled data set.

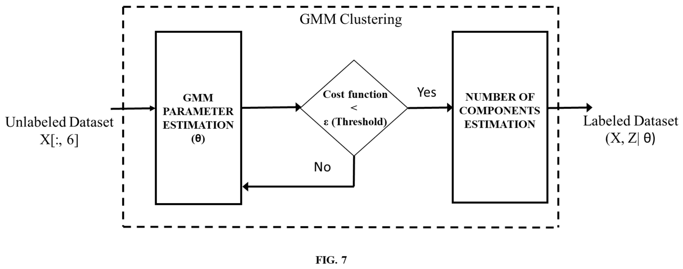

FIG. 7 is a block diagram illustrating a generative approach for dynamic clustering and data labeling, according to some embodiments of the present disclosure. FIG. 7 illustrates the steps involved in creating dynamic clusters and labeling of the data points. Dynamic clustering refers to the capability of the method of the present disclosure to automatically determine the optimal number of service classes present in the whole set of sample data points. In the present disclosure a Gaussian Mixture Model (GMM (known in the art)) method is used to create multiple clusters of the feature vectors. Note, GMM is a probabilistic model that determines the Probability Density Function (PDF) of feature vectors to form clusters. Subsequently, each data point is assigned with a label, which is then propagated to all samples within a cluster.

The multi-variate Gaussian distribution models for each service class are described as follows. As mentioned earlier, service class is considered as a group of related applications. Each service class is created using the GMM clustering approach. Now, a multi-variate time-series data is obtained, which includes set of features as mentioned in the previous section that are extracted from the decoded DCI data and are aggregated over C-RNTI values. The present disclosure considers that the vector data set *X* follows an M-component finite mixture distribution. All the components are *D*-variate Gaussian. For a *D*-dimensional feature vectors $x \in R^D,$ the multi-variate Gaussian density function of component *m* for a class *s* takes the following form:

$$p(x|\theta_m^s) = \frac{1}{(2\pi)^{D/2}|\sigma_m^s|} e\left\{-\frac{1}{2}(x - \mu_m^s)^T(\sigma_m^s)^{-2}(x - \mu_m^s)\right\} \qquad (1)$$

where $\theta_m^s = \{(\mu, \sigma^2) : \mathrm{m} = 1, \cdots, \mathrm{M}\}$ = is a set of parameters containing *D*-dimensional mean vector $\mu \in R^D$ and a *DxD* covariance matrix $\sigma^2$. A separate GMM is computed using DCI data of a service class s. The present disclosure models the PDF of a *D*-dimensional feature vector *x* by a GMM with *M* components. The probability of observing any data point *x* from the Gaussian distribution of a service class s is given as:

$$p(x|\Theta s) = \sum_{m=1}^{M} \omega_m^s p(x|\theta_m^s) \qquad (2)$$

where, $\Theta^s = \{\theta_1^s \ldots \theta_m^s, \omega_1^s \ldots \omega_M^s\}$ is the set of all parameters in the model, $\omega_m^s$ is the mixing probabilities such that $\omega_m^s \geq 0$ and $\sum_{m=1}^{M} \omega_M^s = 1$.

Model Parameter Estimation: In the present disclosure, a Maximum Likelihood Estimate (MLE) method to estimate model parameters $\Theta^s$. The principle of Maximum Likelihood (L) consists of finding a value $\hat{\Theta}^s$ of unknown parameter $\Theta^s$ such that $L(\hat{\Theta}^s) > L(\Theta^s)$; for all possible values of $\Theta^s$. Suppose there was $X = \{x_1,..., x_N\}$, sampled from a multivariate Gaussian distribution. It was found that the value for $\Theta^s$ that maximizes the posterior probability $p(\Theta^s|X)$ to estimate $\hat{\Theta}_{MAP}^s = argmax(log\, p(X|\Theta^s) + log\, p(\Theta^s))$ where $p(X|\Theta^s) = \prod_{i=1}^{N} p(xi|\Theta^s)$.

Since all $x_n$ points are independent, the log-likelihood is as follows:

$$log\ p(X, Z|\Theta^s) = \sum_{n=1}^{N} \sum_{m=1}^{M} z_m^n log\{\omega_m^s p(x_n|\theta_m^s)\} \qquad (3)$$

To solve the maximization problem, in the present disclosure, an iterative approach called an Expectation Maximization (EM) algorithm is used. With the sample vector $x_n$, $z_n$ (label: indicating which GMM Component produces $x_n$) is associated. The EM (Expectation-Maximization) algorithm interprets X as incomplete data, with the missing part being the corresponding set of labels $Z = \{z^1, ..., z^N\}$, $Z \in B^M$, each label is a binary vector, $z^i = [z_1^i, ..., z_M^i]$, where $z_M^i = 1$ and $z_p^i = 0$, $p \in \{1, ..., M\}$ and $p \neq m$. This means that sample $x_i$ was produced by $m^{th}$ component. The log-likelihood of the complete data with labels {X, Z} is as follows:

$$log\ p(X, Z|\Theta^s) = \sum_{n=1}^{N} \sum_{m=1}^{M} z_m^n log\{\omega_m^s p(x_n|\theta_m^s)\} \qquad (4)$$

The EM (Expectation-Maximization) algorithm generates a sequence of approximations to find out the maximum observed likelihood estimator starting from an initial guess $\theta_0$, using two steps (i) Expectation (E-step) and (ii) Maximization (M-step).

E-step: Compute the conditional density for Gaussian mixtures for n = 1,...,N and m = 1,...,M

$$\gamma_{n,m}(\theta^k) = \frac{\omega_m^k p(x|\theta_m^s)}{\sum_{j=1}^{M} \omega_j^k p\big(x|(\theta_j^k)^s\big)} \qquad (5)$$

M-step: Re-estimate the parameters, $\theta_m{}^k$ and $\omega_m^k$

$$\omega_m^{k+1} = \frac{1}{n}\sum_{n=1}^{N} \gamma_{n,m}(\theta^k),\ \mu_m{}^{k+1} = \frac{\sum_{n=1}^{N} \gamma_{n,m}(\theta^k)x_n}{\sum_{n=1}^{N} \gamma_{n,m}(\theta^k)} \qquad (6)$$

$$(\sigma^2)_m^{k+1} = \frac{\sum_{n=1}^{N} \gamma_{n,m}(\theta^k)\,(x_n - \mu_m^{k+1})(x_n - \mu_m^{k+1})^T}{\sum_{n=1}^{N} \gamma_{n,m}(\theta^k)} \qquad (7)$$

The EM (Expectation-Maximization) algorithm continues to iterate until there are changes in the estimated parameters or the value of Log-likelihood exceeds pre-defined threshold value. In the present disclosure, as it is not known how many clusters there are, a variant of EM (Expectation-Maximization) algorithm, named Component-wise EM (CEM) (known in the art) is used.

Number of Component Estimation: One of the key choices in training a GMM is to choose the number of components. Initially a set of candidate models are created for various values and then choose the best one for the present disclosure. The present disclosure considers the following three general purpose models used in practice as the candidate set - (i) Bayesian Information Criteria (BIC) (known in the art), (ii) Minimum Description Length (MDL) (known in the art), and (iii) Minimum Message Length (MML) (known in the art).

Constructing a comprehensive set of candidate models is challenging due to issues associated with EM algorithm (known in the art). Therefore, the present disclosure adopts the approach suggested by one of the existing works, which seamlessly integrates parameter estimation and model iteration. It is assumed that the number of components of each application class is unknown and is different for different application classes. In the present disclosure, MML is used as the candidate model and in our case, aim of CEM is to minimize the MML criterion with the cost function as given below:

$$\Gamma(\Theta^s, X) = \frac{K}{2}\sum_{m;\omega_m^s > 0} \log\left(\frac{N\omega_m^s}{12}\right) + \frac{m_{n,z}}{2}\log\left(\frac{N}{12}\right) \qquad (8)$$

$$+ \frac{m_{n,z}(k+1)}{2} - \log p(X|\Theta^s))$$

The cost function considers the parameters of those components with non-zero probability where $m_{n,z} \in \{1,2,\cdots,M\}$ denote the number of non-zero probability components, $K = D + \frac{D(D+1)}{2}$ is the number of parameters specifying each component and $N\omega_m^s$ represents the expected number of data points generated by the $m^{th}$ component. The CEM iteration continues until the relative decrease in $\Gamma(\Theta^s, X)$ is less than a specified threshold $\varepsilon$. The convergence of the above cost function results in a certain value of $m_{n,z}$, i.e., the optimum number of components.

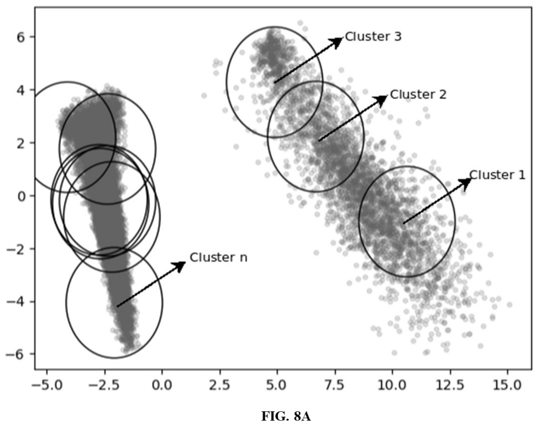

FIGS. 8A through 8C illustrates fitting a Gaussian Mixture with overlapping components including (a) initialization: $m_{nz}$ = 10 (b) Intermediate estimate: $m_{nz}$= 7 (c) Final estimate: $m_{nz}$=4, according to some embodiments of the present disclosure. An unlabeled dataset containing 14, 354 data points is considered, represented in FIGS. 8A through 8C. First, the $m_{max}$ mean vectors are initialized to randomly choose data points, where $m_{max}$ is the maximum number of components for initialization. The initial covariance values are set to be proportional to the identity matrix, $\widehat{C}(t = 0) = \sigma^2 I$, where $\sigma^2$ is a fraction (e.g., 1/5 or 1/10) of average of the variance values across each dimension of the data. The convergence criterion used in the proposed algorithm is $\varepsilon = 1 \times 10^{-4}$. This experiment is repeated 100 times with 100 percent success.

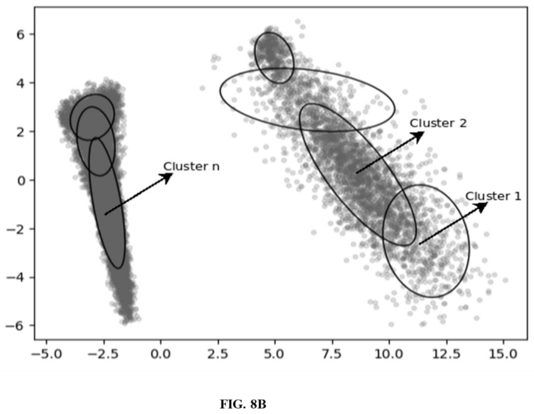

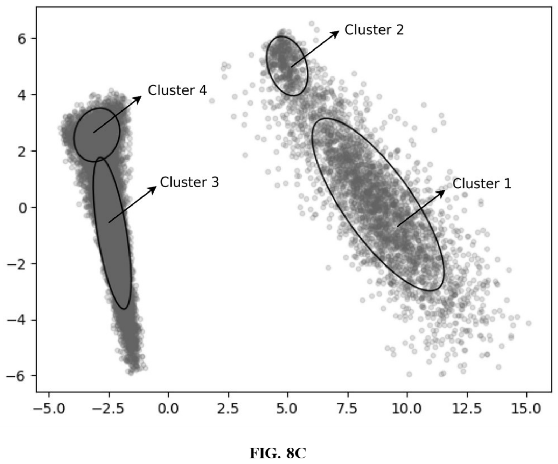

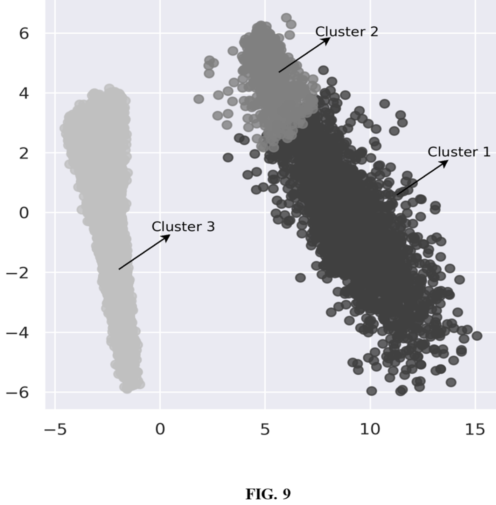

FIG. 8A shows an initialization with $m_{n,z}$ = 10, FIG. 8B and 8C are with estimates $m_{n,z}$= 7 and 4 respectively. The mean values for both the clusters are $\mu_1$ = [-2.97873, 2.55648] and $\mu_2$= [-2.33897, -0.943]. However, upon examination of Fig. 6c, it is evident that clusters 1 and 2 have mean values which are closer to each other in one dimension. Consequently, these clusters are merged, resulting in an adjusted optimal number of clusters, now reduced to 3. This modification is illustrated in FIG. 9, where the $D$-dimensional representation is converted into $2D$ for graphical representation.

FIG. 9 shows one or more Gaussian Mixture Model (GMM) clusters - mixtures which are obtained without any pre-knowledge of service classes, according to some embodiments of the present disclosure. In the present disclosure, the GMM is used to generate the labels, and a K-Means model (known in the art) is implemented for performance comparison. Results indicate that better performance is achieved through GMM (Table. 1) labeled dataset over K-Means clustering technique (known in the art) (Table. 2). It is to be noted that, K-Means clustering technique is a simple and fast clustering algorithm, which uses vector-quantization technique to find centroid and assigns each data point to one cluster. In contrast, GMM is a more sophisticated algorithm for finding centroid using the EM method and leads to better results. Table. 1 depicts GMM Labeled Dataset. Table. 2 depicts K-Means Labeled Dataset.

Table. 1 depicts GMM Labeled Dataset

| Dataset | Accuracy% | Loss | Precision | Recall | F1-Score |
|---------|-----------|------|-----------|--------|----------|
| Training | 98.95 | 0.0416 | 0.991 | 0.991 | 0.972 |
| Testing | 98.88 | 0.039 | 0.989 | 0.989 | 0.966 |
| Mixed 1 | 99.80 | 0.013 | 0.990 | 0.990 | 0.990 |
| Mixed 2 | 98.30 | 0.072 | 0.982 | 0.982 | 0.982 |

Table. 2 depicts K-Means Labeled Dataset

| Dataset | Accuracy% | Loss | Precision | Recall | F1-Score |
|---------|-----------|------|-----------|--------|----------|
| Training | 88.20 | 0.240 | 0.882 | 0.882 | 0.882 |
| Testing | 88.0 | 0.3204 | 0.880 | 0.880 | 0.880 |
| Mixed 1 | 72.20 | 0.528 | 0.720 | 0.720 | 0.720 |
| Mixed 2 | 78.80 | 1.63 | 0.789 | 0.789 | 0.789 |

At step 312 of the method 300, the service classification module 208 and the data verification with out-of-distribution detection module 210 executed via the one or more hardware processors 102 creates a classifier model using a deep learning technique to perform a traffic classification of the obtained labelled dataset. A base Convolutional neural network (CNN) model is used for creating the classifier model. Further an additional layer is added to the base Convolutional neural network (CNN) model to (i) detect an out-of-distribution data and (ii) handle at least one of one or more unknown data points and one or more new data points from a new application.

TRAFFIC CLASSIFICATION AND VALIDATION: Now that every sample in the dataset is labeled, a supervised learning is performed to train a classifier. The labels created from the last step are utilized as the ground truth for training the model, and subsequently its performance is assessed/evaluated. Initially, a study was performed using benchmarking approach to assess the performance of different classifiers available in the state-of-the-art. The present disclosure demonstrates the accuracy (%) and testing-runtime (in sec) of various Machine Learning (ML) models, ensemble-based methods along with CNN in Table. 3. Table. 3 depicts Accuracy and testing runtime of various models.

These metrics are averaged over 5 trials. In this study, trade-offs between accuracy and runtime of the classifiers benchmarked are assessed. From the results, it was observed that CNN has comparably better accuracy with reasonable runtime as compared to other schemes. It is to be noted that, though the ensemble-based schemes have least runtime with reasonable accuracy, they are not suitable for classifier in the present disclosure due to the need of training and storing, which is difficult in real time. Further, Gaussian Process (GP) is not suitable due to the number of features associated with this data. Therefore, CNN is considered in the present disclosure for classification purposes as it is easy and has lower runtime complexity.

Table 3: Accuracy and testing runtime of various models

| Model | Accuracy (%) | Testing Runtime (sec) |
|---|---|---|
| CNN | 98.3 | 0.2345 |
| Gaussian Process | 96.25 | 25.1 |
| LightGBM | 97.1 | 0.0264 |
| Random Forest | 96.9 | 0.0631 |

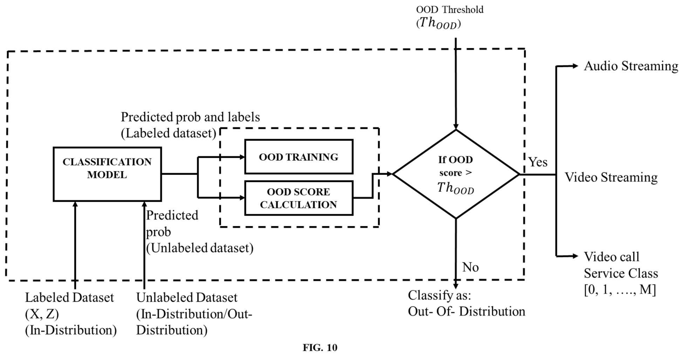

FIG. 10 is a block diagram illustrating an Out-Of-Distribution Detection (OOD) in conjunction with the method for real-time traffic classification in 5G networks, according to some embodiments of the present disclosure.

Out-of-Distribution Detection: In the present disclosure, a tailored version of CNN is used as described below for traffic classification. Also, an additional layer is proposed that was introduced to CNN to perform traffic classification better. To evaluate the robustness of the proposed classifier, use DCI traces with different traffic dynamics for which it is not trained. We further use a simple technique that detects OOD in the data and improves classification further as shown in FIG. 10. Detecting outliers from testing data which do not match the distribution of training data (i.e., Out of Distribution - OOD) is essential for the deployment of real-time classification models. There are two important ways to detect these outliers (known in the art): (i) one is based on feature embedding, and (ii) the other is based on predicted probabilities. Since the feature embedded method heavily depends on the number of features, it requires more features for better OOD detection. Contrary to it, the second method, which relies on predicted probabilities, only requires the predicted probability of the class. Hence it is applicable to any classifiers. The effectiveness of the second approach, which depends on the predicted probabilities, depends on how much auxiliary information is captured in the feature values that are lost in the predicted probabilities. In the proposed solution the predicted probabilities are adjusted to account for this issue.

Let $\hat{p}(z_m^n|x_n, \theta)$ be the predicted probability of label $z_m$ for data point $x_n$ and model parameter $\theta$. Based on $\hat{p}$, OOD scores of $x_n$ is computed. In the present disclosure, entropy is used to quantify how evenly spread the model's probability predictions are amongst all M classes. The entropy score is calculated using Eq. (9) and is used for detecting OOD data points.

$$Entropy(x_n) = -\sum_{m=1}^{M} \hat{p}(z_m^n|x_n, \theta) \log(\hat{p}(z_m^n|x_n, \theta)) \qquad (9)$$

Since the trained models have a biased propensity to predict specific classes when the original dataset is imbalanced, the predicted probability is adjusted using Class Confidential Threshold (CCT) (known in the art). This creates new OOD scores based on the entropy evaluated from the adjusted predictions. The Class Confidential Threshold (CCT) is computed for each $m^{th}$ class, defined as:

$$t_m = \frac{1}{|X_{z=m}|} \sum_{x_n \in X_{z=m}} \hat{p}(z_m^n|x_n, \theta) \qquad (10)$$

Where $|X_{z=m}|$ denotes the number of samples labeled as class m. The Class Confidential Thresholds (CCTs) are the average probability of a class predicted probabilities by our model which represents the self-confidence of each class. The adjustment to the predicted probabilities is performed by considering the tendency of the model to predict each class among all examples labeled with that class. The predicted probability vector $\hat{p}$ is adjusted by the Class Confidential Threshold (CCT) as follows:

$$\hat{p}_{adj} = \frac{1}{z} [\hat{p} - t + t_{max}] \qquad (11)$$

where $t$ is the CCT vector, $t_{max}$ is the highest value of vector $t$ to guarantee that probabilities are non-negative, and z is the normalizing constant to guarantee the summation of all the probabilities across classes is one; $t_{max} = max_{1 \leq m \leq M}\{t_m\}$ and

$$z = \sum_{m=1}^{M}\{\hat{p}_m - t + t_{max}\}$$ . Improved OOD scores for any testing data point $x_n$ are achieved by computing entropy using Eq. (11).

Benchmarking Performance: After the OOD benchmarking procedures, datasets are grouped such that one dataset is used to train the classifier (in-distribution) and the other dataset is used for testing (out-of-distribution). OOD scoring method is applied to all the data points in the test set by analyzing the Area Under the Receiver Operating Characteristic (AUROC). The present disclosure compares multiple OOD score calculation methods based on predicted class probabilities like Mahalanobis distance, Entropy and Adjusted Entropy (known in the art); results are shown in Table. 4. Table. 4 depicts Performance of OOD Detection. With adjustment to the predicted probabilities of a trained classifier, the performance of Entropy-based out-of-distribution detection score (AUROC score) is increased.

Table. 4: Performance of OOD Detection

| Method for Score Cn | AUROC Score |
| --- | --- |
| Adjusted Entropy | 0.978 |
| Entropy | 0.804 |
| Mahalanobis | 0.785 |

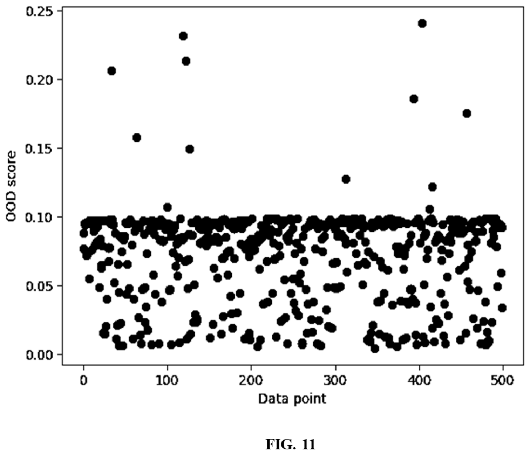

FIG. 11 shows the Out-Of-Distribution Detection (OOD) score evaluation for Out-of-Distribution Data, according to some embodiments of the present disclosure.

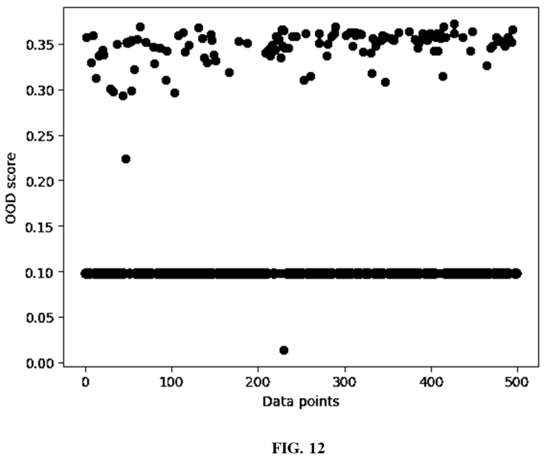

FIG. 12 shows an In-Distribution Detection (OOD) score evaluation for In-Distribution Data, according to some embodiments of the present disclosure.

Optimal OOD Threshold: To evaluate the model of the system and method of the present disclosure for OOD detection, a data set has been synthetically generated. To compute the optimum $Th_{OOD}$, the range of threshold value was determined initially by computing OOD score using Eq. (9) for both in-distribution and synthetically generated out-of-distribution dataset. Then both the datasets (in-distribution and out-of-distribution) were combined and the F1 score was computed for different values of thresholds, as presented in Table. 5. The method of the present disclosure used the OOD score corresponding to the highest F1 score as the optimal OOD Threshold. Table. 5 indicates that the highest F1 score is 0.873 which is achieved at $Th_{OOD}$= 0.09. Hence, $Th_{OOD}$= 0.09. It is to be noted that data point is considered to be out-of-distribution if the OOD score is less than this threshold value (i.e., 0.09); otherwise, it is considered as in-distribution. FIG. 11 depicts the OOD score which is below 0.09. Conversely, when we examine the in-distribution dataset depicted in FIG. 12 it's evident that the OOD score exceeds 0.09.

Table. 5: OOD Threshold vs. F1 Score

| OOD Threshold ($Th_{OOD}$) | F1 Score |
| --- | --- |
| 0.05 | 0.688 |
| 0.08 | 0.804 |
| 0.09 | 0.873 |
| 0.10 | 0.327 |
| 0.20 | 0.329 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The present disclosure provides a method for classifying mobile traffic services using real-time radio-link level DCI data, without the need for decryption. The method of the present disclosure provides the real-time recognition of the service type of traffic to enable the efficient use of limited network resources. The method of the present disclosure implements a classification technique that recognizes both existing and new services. First, the optimal number of clusters present in the unlabeled DCI dataset is obtained. Then unsupervised GMM-based clustering is performed over the complete dataset. Each data point is labeled to their corresponding service class by GMM fitted clusters. The labeled traffic is then classified using CNN to assign unspecified mobile traffic to a service class. The final verification step identifies the out-of-distribution or traffic generated from a new service type is done by using adjusted entropy approach. OOD (Out-of-Distribution)-Score is evaluated to determine whether a service claimed by any new traffic is pre-defined or unknown. Misclassification of unknown traffic may affect the user experience; hence, it is better to classify it as "unknown" than to interpret wrongly. The effectiveness of the traffic classification approach as implemented by the system and the method of present disclosure has been evaluated by conducting different sets of experiments on a public dataset. The traffic classifier of the present disclosure achieved an overall accuracy of 98.6% with reasonable runtime which is superior to other conventional/classic classifiers.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:

    receiving (302), via one or more hardware processors, an unlabeled dataset from one or more Downlink Control Information (DCI) messages carried within an LTE (Long-Term Evolution)-PDCCH (Physical Downlink Control Channel), wherein the unlabeled data set comprises a plurality of data points and wherein each of the plurality of data points comprises a plurality of features;
    pre-processing (304), via the one or more hardware processors, the received unlabeled data set further comprising the plurality of data points using a data cleaning technique and a feature selection technique;

selecting (306), via the one or more hardware processors, a set of relevant features from the plurality of data points comprised in the received unlabeled data set using a correlation matrix, wherein the correlation matrix identifies and retains the set of relevant features by eliminating one or more irrelevant features;

performing (308), via the one or more hardware processors, iteratively till a cost function is less than a pre-defined threshold value:

(i) evaluating one or more hyper-parameters of a Gaussian Mixture Model (GMM) from the unlabeled data set with the selected set of relevant features using a Component-wise space Expectation Maximization technique (CEM) method; and

(ii) estimating an optimal number of clusters using the evaluated one or more hyper-parameters of the Gaussian Mixture Model (GMM);

labeling (310), via the one or more hardware processors, each of the plurality of data points comprised in the unlabeled dataset with the selected set of relevant features using the estimated optimal number of clusters to obtain a labelled data set; and

creating (312), via the one or more hardware processors, a classifier model using a deep learning technique to perform a traffic classification of the obtained labelled dataset, wherein a base Convolutional neural network (CNN) model is used for creating the classifier model, and wherein an additional layer is added to the base Convolutional neural network (CNN) model to (i) detect an out-of-distribution data and (ii) handle at least one of one or more unknown data points and one or more new data points from a new application.

2. The processor implemented method as claimed in claim 1, wherein the set of relevant features comprise a resource block, a transport block size, and a modulation code scheme.

3. A system (100), comprising:

a memory (104) storing instructions;

one or more communication interfaces (112); and

one or more hardware processors (102) coupled to the memory (104) via the one or more communication interfaces (112), wherein the one or more hardware processors (102) are configured by the instructions to:

receive an unlabeled dataset from one or more Downlink Control Information (DCI) messages carried within an LTE (Long-Term Evolution)-PDCCH (Physical Downlink Control Channel), wherein the unlabeled data set comprises a plurality of data points and wherein each of the plurality of data points comprises a plurality of features;

pre-process the received unlabeled data set further comprising the plurality of data points using a data cleaning technique and a feature selection technique;

select a set of relevant features from the plurality of data points comprised in the received unlabeled data set using a correlation matrix, wherein the correlation matrix identifies and retains the set of relevant features by eliminating one or more irrelevant features;

perform iteratively till a cost function is less than a pre- defined threshold value:

(i) evaluating one or more hyper-parameters of a Gaussian Mixture Model (GMM) from the unlabeled dataset with the selected set of relevant features using a Component-wise space Expectation Maximization technique (CEM) method; and

(ii) estimating an optimal number of clusters using the evaluated one or more hyper-parameters of the Gaussian Mixture Model (GMM);

label each of the plurality of data points comprised in the unlabeled dataset with the selected set of relevant features using the estimated optimal number of clusters to obtain a labelled data set; and

create a classifier model using a deep learning technique to perform a traffic classification of the obtained labelled dataset, wherein a base Convolutional neural network (CNN) model is used for creating the classifier model, and wherein an additional layer is added to the base Convolutional neural network (CNN) model to (i) detect an out-of-distribution data and (ii) handle at least one of one or more unknown data points and one or more new data points from a new application.

4. The system as claimed in claim 3, wherein the set of relevant features comprises a resource block, a transport block size, and a modulation code scheme.

5. One or more non-transitory machine-readable information storage mediums comprising one or more instructions which when executed by one or more hardware processors cause:

receiving an unlabeled dataset from one or more Downlink Control Information (DCI) messages carried within an LTE (Long-Term Evolution)-PDCCH (Physical Downlink Control Channel), wherein the unlabeled data set comprises a plurality of data points and wherein each of the plurality of data points comprises a plurality of features;

pre-processing the received unlabeled data set further comprising the plurality of data points using a data cleaning technique and a feature selection technique;

selecting a set of relevant features from the plurality of data points comprised in the received unlabeled data set using a correlation matrix, wherein the correlation matrix identifies and retains the set of relevant features by eliminating one or more irrelevant features;

performing iteratively till a cost function is less than a pre-defined threshold value:

(i) evaluating one or more hyper-parameters of a Gaussian Mixture Model (GMM) from the unlabeled data set with the selected set of relevant features using a Component-wise space Expectation Maximization technique (CEM) method; and

(ii) estimating an optimal number of clusters using the evaluated one or more hyper-parameters of the Gaussian Mixture Model (GMM);

labeling each of the plurality of data points comprised in the unlabeled dataset with the selected set of relevant features using the estimated optimal number of clusters to obtain a labelled data set; and

creating a classifier model using a deep learning technique to perform a traffic classification of the obtained labelled dataset, wherein a base Convolutional neural network (CNN) model is used for creating the classifier model, and wherein an additional layer is added to the base Convolutional neural network (CNN) model to (i) detect an out-of-distribution data and (ii) handle at least one of one or more unknown data points and one or more new data points from a new application.

6. The one or more non-transitory machine-readable information storage mediums as claimed in claim 5, wherein the set of relevant features comprise a resource block, a transport block size, and a modulation code scheme.

MEMORY 104

MODULES 106

REPOSITORY 110

108

I/O INTERFACE 112

HARDWARE PROCESSORS 102

100

FIG. 1

INPUT MODULE 202 → DATA PRE-PROCESSING MODULE 204 → DYNAMIC CLUSTERING AND DATA LABELING MODULE 206 → SERVICE CLASSIIFCATION MODULE 208 → DATA VERIFICATION WITH OUT-OF-DISTRIBUTION DETECTION MODULE 210

FIG. 2

receiving an unlabeled dataset from one or more Downlink Control Information (DCI) messages carried within a Long-Term Evolution (LTE)-Physical Downlink Control Channel (PDCCH), wherein the unlabeled data set comprises a plurality of data points and wherein each of the plurality of data points comprises a plurality of features — 302

pre-processing the received unlabeled data set comprising the plurality of data points using a data cleaning technique and a feature selection technique — 304

selecting a set of relevant features from the plurality of data points comprised in the received unlabeled data set using a correlation matrix, wherein the correlation matrix identifies and retains the set of relevant features by eliminating one or more irrelevant features — 306

performing iteratively till a cost function is less than a pre-defined threshold value:

(i) evaluating one or more hyper-parameters of a Gaussian Mixture Model (GMM) from the unlabeled dataset with the selected set of relevant features using a Component-wise space Expectation Maximization technique (CEM) method; and

(ii) estimating an optimal number of clusters using the evaluated one or more hyper-parameters of the Gaussian Mixture Model (GMM)

— 308

A

300

**FIG. 3A**

A

labeling each of the plurality of data points comprised in the unlabeled dataset with the selected set of relevant features using the estimated optimal number of clusters to obtain a labelled data set — 310

creating a classifier model using a deep learning technique to perform a traffic classification of the obtained labelled dataset, wherein a base Convolutional neural network (CNN) model is used for creating the classifier model, and wherein an additional layer is added to the base Convolutional neural network (CNN) model (i) to detect out-of-distribution data and (ii) to handle at least one of one or more unknown data points and one or more new data points from a new application — 312

**FIG. 3B**

300

FIG. 4

Training data
Unlabeled DCI Data
X[N, 11]

DATA CLEANING

FEATURE
SELECTION

Unlabeled Data
X[N, 6]

Data Pre-processing

FIG. 5

**FIG. 6A**

**FIG. 6B**

GMM Clustering

Unlabeled Dataset
X[:, 6]

| GMM
PARAMETER
ESTIMATION
(θ) |

Cost function
<
ε (Threshold)

Yes

No

NUMBER OF
COMPONENTS
ESTIMATION

Labeled Dataset
(X, Z| θ)

**FIG. 7**

**FIG. 8A**

**FIG. 8B**

**FIG. 8C**

**FIG. 9**

**FIG. 10**

FIG. 11

**FIG. 12**

Europäisches
Patentamt
European
Patent Office
Office européen
des brevets

# EUROPEAN SEARCH REPORT

**Application Number**

EP 25 22 1013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOANG DUY TRINH ET AL: "Mobile Traffic Classification through Physical Channel Fingerprinting: a Deep Learning Approach", ARXIV.ORG CORNELL UNIVERSITY LIBRARY, 201 OLIN LIBRARY CORNELL UNIVERSITY ITHACA, NY 14853, 25 October 2019 (2019-10-25), XP081594598, * abstract * * column 2, line 16 - column 7, line 22 * * column 9, line 11 - column 12, line 32 * ----- | 1-6 | INV. H04L67/60 G06N3/02 |
| A | KR 2022 0050747 A (KOREA ADVANCED INST SCI & TECH [KR]) 25 April 2022 (2022-04-25) * paragraph [0008] - paragraph [0013] * * paragraph [0032] - paragraph [0045] * * figures 1-3 * ----- | 1-6 | |

**TECHNICAL FIELDS SEARCHED (IPC)**

H04L
G06E
G06N

The present search report has been drawn up for all claims

| Place of search | Date of completion of the search | Examiner |
|---|---|---|
| The Hague | 19 April 2026 | Durand-Schaefer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1013

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2026

| Patent document cited in search report | Publication date | Patent family member(s) | Publication date |
|---|---|---|---|
| KR 20220050747 A | 25-04-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IN 202521001203